# EUROPÄISCHE PATENTSCHRIFT

(11) **EP 4 332 832 B1**
(45) Veröffentlichungstag und Bekanntmachung des Hinweises auf die Patenterteilung: **26.06.2024**
(21) Anmeldenummer: 22193715.4
(22) Anmeldetag: 02.09.2022
(51) Int. Cl.: G06K 7/14

(54) **LOKALISIEREN EINES OPTISCHEN CODES**
LOCATING AN OPTICAL CODE
LOCALISATION D'UN CODE OPTIQUE

(43) Veröffentlichungstag der Anmeldung: 06.03.2024
(73) Patentinhaber: SICK AG, 79183 Waldkirch (DE)
(72) Erfinder: Hallmann, Vicky, Freiburg (DE); Steinbuch, Jonathan, Denzlingen (DE)

(56) Entgegenhaltungen:
- EP-A1- 1 383 074
- US-A1- 2006 050 961
- US-B1- 9 501 681

## Beschreibung

Die Erfindung betrifft ein Verfahren zum Lokalisieren eines optischen Codes nach dem Oberbegriff von Anspruch 1.

Codeleser sind von Supermarktkassen, zur automatischen Paketidentifikation, Sortierung von Postsendungen, von der Gepäckabfertigung in Flughäfen und aus anderen Logistikanwendungen bekannt. In einem Codescanner wird ein Lesestrahl mittels eines Drehspiegels oder eines Polygonspiegelrads quer über den Code geführt. Ein kamerabasierter Codeleser nimmt mittels eines Bildsensors Bilder der Objekte mit den darauf befindlichen Codes auf, und eine Bildauswertungssoftware extrahiert aus diesen Bildern die Codeinformation.

In einer wichtigen Anwendungsgruppe werden die codetragenden Objekte an dem Codeleser vorbei gefördert. Ein scannender Codeleser erfasst dabei die jeweils nacheinander in seinen Lesebereich geführten Codes. Alternativ liest in einem kamerabasierten Codeleser eine Zeilenkamera die Objektbilder mit den Codeinformationen sukzessive und zeilenweise mit der Relativbewegung ein. Mit einem zweidimensionalen Bildsensor werden regelmäßig Bilddaten aufgenommen, die sich je nach Aufnahmefrequenz und Fördergeschwindigkeit mehr oder weniger überlappen. Damit die Objekte in beliebiger Orientierung auf dem Förderer angeordnet werden können, sind oft mehrere Codeleser an einem Lesetunnel vorgesehen, um Objekte von mehreren oder allen Seiten aufzunehmen. Auch ein scannender Codeleser erfasst die Remission und damit letztlich Bildzeilen, die zu einem Objektbild zusammengefügt werden können, auch wenn hierfür in der Praxis ein Bildsensor vorgezogen wird. In einem solchen Objektbild können Codebereiche identifiziert und Codes ausgelesen werden.

Das Decodieren ist ein relativ aufwändiger Prozess. Deshalb werden üblicherweise gezielt nur diejenigen Bildabschnitte einem Decoder zugeführt, in denen durch Vorverarbeitung ein optischer Code erkannt wurde, vorzugsweise schon mit weiteren Informationen wie genaue Position und Orientierung sowie Typ und Größe des Codes. Einige Codearten unterstützen das Lokalisieren durch Suchmuster (Finder Pattern), die leicht und robust erkannt werden können. Ein QR-Code beispielsweise weist dafür Suchmuster in drei Ecken auf, ein Aztec-Code eines im Zentrum. Das Suchmuster selbst besteht aus 7x7 Codemodulen mit einem 3x3-Feld in der Mitte, das von zwei alternierenden Ringen oder Rechtecken umgeben ist.

In der Theorie ist ein solches Suchmuster leicht anhand der bekannten Eigenschaften zu finden. Dafür wird das Bild zeilenweise nach den für das Suchmuster charakteristischen Kantenübergängen abgesucht und anhand der Kantenübergänge ein vermuteter Rahmen um das Suchmuster gelegt. In einem realen Bild allerdings gibt es Störungen, Verzerrungen, Verdeckungen, mangelnden Kontrast und Unschärfen. Deshalb ist es erforderlich, die Bedingungen an die Kantenübergänge für das Suchmuster nicht allzu scharf zu fassen. Je nach Toleranz handelt man sich dadurch eine zunehmende Anzahl falsch positiver Suchmuster ein, mit der Konsequenz, dass der Decoder doch auf Bildbereichen arbeitet, in denen sich tatsächlich gar kein Code befindet. Umgekehrt werden manche teilweise verdeckte Suchmuster herkömmlich verworfen, und damit wird ein vorhandener Code übersehen und nicht gelesen. Es ist also eine hohe Sensitivität und Spezifizität bei der Lokalisierung eines Codes erwünscht, um die Anzahl der beschriebenen Fehler erster Art wie zweiter Art so gering wie möglich zu halten. Dies wird aber im Stand der Technik nicht zufriedenstellend erreicht.

Es gibt alternative Ansätze, um Suchmuster zu finden. Dazu zählen Template-Matching, Haar-Features und maschinelles Lernen. Dabei treten jedoch vergleichbare Fehler auf. Speziell mit maschinellem Lernen scheinen bessere Ergebnisse grundsätzlich möglich, jedoch nicht mit der typischerweise für Codelesen zur Verfügung stehenden Hardware beziehungsweise in den geforderten kurzen Ansprechzeiten für ein Codelesen in Echtzeit.

Die US 9 355 293 B2 offenbart ein System zur Erkennung und Decodierung von QR-Codes, das ein Template für ein Pattern Matching erzeugt, um Suchmuster und damit den Code zu finden.

In der US 2004/0020989 A1 werden Suchmuster längs Scanlinien anhand der spezifischen Abstände zwischen Schwarz-Weiß-Übergängen erkannt. Das Dokument diskutiert nicht, wie hierbei mit Toleranzen und Fehlern umzugehen ist. Die US 7 546 950 B2 bezieht sich einleitend auf die US 2004/0020989 A1 und sucht ebenfalls zeilenweise nach den bekannten Strukturen des Suchmusters.

Die US 9 501 681 B1 offenbart Algorithmen zum Decodieren von DataMatrix-Codes, die eine beliebige Position und Orientierung in einem aufgenommenen Bild einnehmen. Teile eines aufgenommenen Codes werden mittels Connected-Components-Analyse aufgefunden. Darunter werden die beiden zueinander fernsten Pixel ermittelt, aus denen auf die Codeposition geschlossen wird.

In der US 2006/0050961 A1 wird ein Verfahren zum Lokalisieren und Verifizieren eines Finder Patterns eines Maxi-Codes beschrieben. Das Bild wird zeilenweise abgescannt, um das Zentrum des wie eine Zielscheibe aufgebauten Finder Patterns zu suchen. Die für die Ringe der Zielscheibe charakteristische Abfolge von Hell-Dunkel-Übergängen wird dann noch in anderen Orientierungen anhand weiterer Linien durch das Zentrum des vermuteten Finder Patterns bestätigt.

Aus der EP 1 383 074 A1 ist eine Vorrichtung zum Lesen zweidimensionaler Codes bekannt, in der die drei Finder Pattern eines QR-Codes längs horizontaler, vertikaler und schräger Scanlinien anhand ihres 1:1:3:1:1-Verhältnisses der Schwarz-Weiß-Übergänge lokalisiert werden.

Es ist daher Aufgabe der Erfindung, das Lokalisieren eines optischen Codes zu verbessern.

Diese Aufgabe wird durch ein Verfahren zum Lokalisieren eines optischen Codes sowie eine optoelektronische Codelesevorrichtung mit dem darin implementierten Verfahren nach Anspruch 1 beziehungsweise 15 gelöst. Vorsorglich sei klargestellt, dass es sich um ein automatisch ablaufendes, insbesondere computerimplementiertes Verfahren handelt, das beispielsweise in einem Codeleser oder einer daran angeschlossenen Rechenvorrichtung abläuft, wie einem Steuerungsgerät, einem Computer, einem Edge Device, einem Netzwerk oder einer Cloud. Es wird ein Bild aufgenommen, in dem sich vermutlich mindestens ein optischer Code befindet, insbesondere ein QR-Code oder ein Aztec-Code. Wie einleitend erläutert, kann dies in einer Aufnahme oder sukzessive während einer Relativbewegung erfolgen, wobei auch die Helligkeitsprofile eines Codescanners als eine Bildzeile aufgefasst werden können. Das Bild weist eine Vielzahl von Pixeln auf, typischerweise ein Pixelraster von m x n Pixeln.

Der Code wird mit Hilfe mindestens eines Suchmusters (Finder Pattern) lokalisiert. Zunächst wird eine Kandidatenposition ermittelt, die zumindest dem ersten Anschein nach Teil eines Suchmusters ist. Dazu werden Kantenübergänge längs mindestens einer Linie durch das Bild bestimmt. Als Kante wird der Übergang zwischen einem dunklen und einem hellen Codeelement oder umgekehrt zwischen einem hellen und einem dunkeln Codeelement bezeichnet. Dabei sind die Codeelemente nur in einem binarisierten Bild tatsächlich schwarz und weiß, ansonsten wird hier vereinfachend kein Unterschied zwischen weiß und hellen Grautönen beziehungsweise schwarz und dunklen Grautönen gemacht. Die Linie folgt vorzugsweise der Zeilenrichtung oder Spaltenrichtung. Andere Richtungen sind prinzipiell auch möglich, aber die Implementierung wird aufwändiger, und es können Diskretisierungsartefakte entstehen.

Anschließend wird in einer Umgebung der Kandidatenposition die Lage des Suchmusters bestimmt. Die Kandidatenposition ist noch recht grob, beispielsweise ein einzelner Punkt in etwa in der vermuteten Mitte des Suchmusters. Die Lage des Suchmusters hingegen gibt an, welche Pixel zu dem Suchmuster gehören, beispielsweise in Form eines Rahmens um das Suchmuster. Dabei ist die konkrete Repräsentation, etwa als Ecken oder umgebendes Viereck, nicht von Bedeutung und nicht festgelegt.

Die Erfindung geht von dem Grundgedanken aus, das bereits samt seiner Lage aufgefundene Suchmuster nochmals zu verifizieren. Mit der Lage des Suchmusters, beispielsweise einem Rahmen, werden dessen Eigenschaften wie eine Modulgröße bis hin zu einzelnen Codemodule prüfbar. Ein Codemodul oder kurz Modul ist das kleinste Element des Codes. Damit korrespondierend wird die Modulgröße als ein Maß für die Ausdehnung des Moduls in Pixel pro Modul (ppm) angegeben. Da vollständig bekannt ist, wie ein Suchmuster aussehen muss, können weitere Eigenschaften des zu verifizierenden Suchmusters geprüft werden, die zumindest in dieser Form zu dessen Lokalisieren noch nicht verwendet wurden, beziehungsweise es kann ein Prüfschritt durchgeführt werden, der zum Auffinden der Lage nicht genutzt wurde.

Die Erfindung hat den Vorteil, dass die Fehlerquote beim Lokalisieren von Suchmustern und letztlich optischen Codes reduziert wird. Es können etwas großzügiger Suchmuster erkannt werden, einschließlich teilweise verdeckter oder solcher Suchmuster, bei denen beispielsweise aufgrund mangelnden Kontrastes die Kantenerkennung sporadisch fehlschlägt. Damit werden kaum noch Suchmuster übersehen. Die Verifikation stellt sicher, dass anfänglich fälschlich akzeptierte Suchmuster am Ende doch noch korrekt verworfen werden. Insgesamt ist deshalb die Rate von Fehlern erster Art wie zweiter Art gering, oder sind positiv ausgedrückt sowohl Sensitivität als auch Spezifizität der Erkennung von Suchmustern und damit Codes sehr hoch. Dabei genügen einfache geometrische Operationen mit nur wenigen Zugriffen auf die Pixel des Bildes, so dass das Verfahren effizient und schnell arbeitet und so echtzeitfähig bleibt beziehungsweise nur einen kleinen Anteil der kurzen Zeitfenster beansprucht, die zum Decodieren in einem Lesetunnel zur Verfügung stehen. Dem Decoder werden sehr schnell nahezu alle (Sensitivität) Codes zugeführt, ohne dass Rechenzeit auf Bildbereiche aufgewandt werden muss, die tatsächlich gar keinen Code enthalten (Spezifizität). Dadurch steigt die Leserate und damit das wichtigste Qualitätskriterium einer Codeleseanwendung.

Bevorzugt ist eine Kandidatenposition bestimmt, wenn die Kantenübergänge längs der mindestens einen Linie unter Berücksichtigung einer Toleranz Abstände im Verhältnis 1:1:3:1:1 zueinander aufweisen. Dies entspricht der Konvention für ein Suchmuster eines QR-Codes oder eines Aztec-Codes mit innerem 3x3-Quadrat und zwei umgebenden rechteckförmigen Ringen. Eine Besonderheit dieses Suchmusters ist, dass diese Abstandsverhältnisse in jeder Richtung vorliegen, und damit ganz unabhängig von der Orientierung des Codes auch für eine Linie einer beliebigen vorgegebenen Richtung, insbesondere in Zeilenrichtung des Bildes. In einem realen Bild sind die Abstandsverhältnisse nicht exakt zu erwarten, so dass vorzugsweise eine Toleranz zugelassen wird.

Die Kandidatenposition wird bevorzugt als Schwerpunkt von Kantenübergängen längs der mindestens einen Linie bestimmt. Die Kandidatenposition soll möglichst zentral in dem Suchmuster liegen, und das wird durch diese Schwerpunktbildung schon einmal in Linienrichtung erreicht. Quer dazu kann das Zentrum des Suchmusters jedenfalls nicht fern sein, weil sonst die Bedingung der Kantenübergänge in Richtung der Linie nicht erfüllt wäre. Insbesondere liegen Abstandsverhältnisse von 1:1:3:1:1 nur bei Linien durch das zentrale 3x3-Feld des Suchmusters vor. Für die Berechnung des Schwerpunktes gibt es verschiedene Möglichkeiten, beispielsweise als Mitte zwischen den beiden äußersten Kantenübergängen oder als Durchschnitt aller Kantenübergänge.

Wenn Kantenübergänge längs mehrerer zueinander paralleler Linien auf ein Suchmuster hinweisen, wird vorzugsweise die Kandidatenposition mittig zwischen den parallelen Linien bestimmt. Mehrere benachbarte, zueinander parallele Linien können Kantenübergänge aufweisen, die auf das Queren eines Suchmusters schließen lassen, insbesondere das Abstandsverhältnis 1:1:3:1:1 zwischen den Kantenübergängen. Das Zentrum des Suchmusters ist dann auf der mittleren Linie beziehungsweise bei gerader Anzahl betroffener Linien zwischen den beiden mittleren Linien zu erwarten. Diese Mitte kann zweischrittig gefunden werden, indem erst wie im Vorabsatz ein Schwerpunkt je Linie und dann ein Schwerpunkt der Schwerpunkte quer zur Linienrichtung bestimmt wird. Die Berechnung kann jedoch beliebig erfolgen, etwa als Schwerpunkt sämtlicher Kantenübergänge der betroffenen Linien oder nur der jeweils äußersten Kantenübergänge beziehungsweise Linien.

Zum Bestimmen der Lage des Suchmusters in einer Umgebung der Kandidatenposition werden bevorzugt die jeweils nächsten drei Kantenübergänge längs von der Kandidatenposition sternförmig ausgehender Strahlen bestimmt, insbesondere längs acht oder sechzehn Strahlen in gleichem Winkelabstand zueinander. Die Kandidatenposition wurde zunächst nur anhand von Linien einer gleichen Richtung aufgefunden, insbesondere der Zeilenrichtung. Durch die sternförmigen Strahlen wird das Suchmuster nun in alle Richtungen genauer lokalisiert. Dabei werden bevorzugt acht Richtungen im gegenseitigen Winkelversatz von jeweils 45° oder sechzehn Richtungen im gegenseitigen Winkelversatz von 22,5° verwendet. Ein noch engeres Winkelraster wird zu aufwändig ohne spürbare Verbesserung. Ein ungleichmäßiges Winkelraster ist denkbar, macht aber die stille und unberechtigte Annahme, dass einige Richtungen wichtiger sind. Eine gleichmäßige Unterteilung mit anderer Anzahl Strahlen, beispielsweise sieben Strahlen, hat den Nachteil, dass die Steigung der Strahlen nicht mehr bei einem einfachen Wert wie ½, 1 oder 2 liegt und somit Diskretisierungsfehler auftreten. Die nächsten drei Kantenübergänge führen in dem Fall, dass die Kandidatenposition tatsächlich halbwegs mittig in einem Suchmuster liegt, durch die beiden umgebenden rechteckigen Ringe. Als optionaler Schritt kann geprüft werden, ob die Abstände der Kantenübergänge in alle oder jedenfalls die meisten Richtungen plausibel mit dem Queren zweier rechteckiger Ringe sind.

Die jeweiligen ersten Kantenübergänge der Strahlen werden bevorzugt zu einem ersten Ring, die jeweiligen zweiten Kantenübergänge der Strahlen zu einem zweiten Ring und/oder die jeweiligen dritten Kantenübergänge zu einem dritten Ring verbunden. Diese Ringe bilden die bisher geschätzte Approximation an die Kanten zwischen dem Zentrum und den rechteckigen Ringen des Suchmusters.

Vorzugsweise werden bestätigte Ringabschnitte der Ringe ermittelt, die längs einer Kante verlaufen, insbesondere mit Hilfe eines Sobelfilters. Die Kantenübergänge längs der Strahlen können aus verschiedenen Gründen in Wirklichkeit nicht mit rechteckigen Ringen eines Suchmusters übereinstimmen, etwa weil an der Kandidatenposition gar kein Suchmuster liegt, weil längs eines Strahls ein Kantenübergang verdeckt ist, einen schlechten Kontrast aufweist oder mit den eingestellten Kriterien für einen Kantenübergang übersehen wurde. Deshalb ist eine zusätzliche Prüfung sinnvoll, ob ein Ringabschnitt wirklich längs einer Kante eines Suchmusters verläuft. Die drei Ringe werden dadurch in bestätigte und nicht bestätigte Ringabschnitte aufgeteilt, und vorzugsweise wird nur mit den bestätigten Ringabschnitten weitergearbeitet. Gibt es keine bestätigten oder zu wenige bestätigte Ringabschnitte, kann das Verfahren für diese Kandidatenposition abgebrochen werden. Eine bevorzugte Möglichkeit, Ringabschnitte zu bestätigen, ist die Verwendung eines Sobelfilters.

Vorzugsweise werden Ringabschnitte der Ringe in horizontale und vertikale Ringabschnitte klassifiziert, und daraus wird eine Orientierung des Suchmusters bestimmt. Die Ringabschnitte gehen auf die Verbindungslinien zwischen den Kantenübergängen auf den sternförmigen Strahlen aus der Kandidatenposition zurück. Verlaufen sie tatsächlich längs der Kanten zwischen dem Zentrum und den rechteckigen Ringen eines Suchmusters, so weisen sie nur zwei Orientierungen entsprechend der horizontalen und vertikalen Hauptrichtung des Suchmusters auf. Zumindest näherungsweise gilt das ebenso für die gefundenen Ringabschnitte, die entsprechend geclustert werden, um diese beiden Hauptrichtungen aufzufinden. Die Hauptrichtungen werden dann beispielsweise als mittlere Orientierung der Ringabschnitte des jeweiligen Clusters festgelegt. Es können alle Ringabschnitte verwendet werden oder vorzugsweise nur bestätigte Ringabschnitte und/oder beispielsweise nur Ringabschnitte eines Rings, etwa des dritten, äußersten Rings.

Es wird vorzugsweise je ein äußerster Ringabschnitt in den vier Hauptrichtungen gemäß der Orientierung ausgewählt, wobei Geraden längs der Ringabschnitte die Lage des Suchmusters umrahmen. Ist die Orientierung des Suchmusters einmal bestimmt, so sind die vier Hauptrichtungen "oben", "unten", "rechts" und "links" in einem an diese Orientierungen gebundenen Koordinatensystem definiert. In jeder dieser Hauptrichtungen wird nun ein äußerster Ringabschnitt gesucht, vorzugsweise ein bestätigter Ringabschnitt des dritten Rings. Geraden durch diese Ringabschnitte bilden nun einen Rahmen um das Suchmuster, das damit lokalisiert ist.

Falls in einer Hauptrichtung kein äußerster Ringabschnitt aufgefunden werden kann, wird bevorzugt der fehlende äußerste Ringabschnitt aus anderen Ringabschnitten anhand der bekannten Struktur eines Suchmusters rekonstruiert. Es kann sein, dass in einer Hauptrichtung das Suchmuster verdeckt oder zu kontrastschwach ist, oder dass aus sonstigen Gründen kein äußerster Ringabschnitt in dieser Hauptrichtung aufzufinden ist, jedenfalls kein bestätigter äußerster Ringabschnitt. In diesem Fall ist es möglich, den Abschluss des Rahmens in dieser Hauptrichtung aus der sonstigen Information zu rekonstruieren, insbesondere aus Ringabschnitten des ersten und/oder zweiten Rings in dieser Hauptrichtung und/oder den äußersten Ringabschnitten in den dazu seitlichen Hauptrichtungen. Grundlage für die Rekonstruktion kann wiederum das bekannte Abstandsverhältnis von 1:1:3:1:1 eines Suchmusters sein.

Zum Verifizieren des Suchmusters werden vorzugsweise sieben zueinander parallele Halblinien in gleichmäßigem Abstand zueinander von einer Hauptachse des Suchmusters ausgehend nach außen hin durch eine Hälfte des Suchmusters gelegt, und für das Verifizieren des Suchmusters wird gefordert, dass auf den Halblinien in dieser Reihenfolge jeweils 1, 2, 3, 3, 3, 2, 1 Kantenübergänge liegen. Die sieben Halblinien überdecken in gleichmäßigem Raster eine Hälfte des Suchmusters. Durch die vorangegangene Bestimmung der Lage des Suchmusters sind Modulgröße und erwartete Codemodule samt Position innerhalb des Suchmusters bekannt. Die Halblinien liegen im beschriebenen Raster so, dass jede Halblinie eine eigene Reihe von Codemodulen abdecken, und die Halblinien gemeinsam alle Codemodule in der jeweiligen Hälfte des Suchmusters. Abweichungen von dem gleichmäßigen Raster, die das jeweilige Codemodul nicht verlassen, sind unerheblich und zugelassen. Sofern tatsächlich unter den Halblinien ein Suchmuster liegt, müssen die Halblinien in dieser Reihenfolge jeweils 1, 2, 3, 3, 3, 2, 1 Kanten schneiden. Das ist eine Konsequenz der Struktur des Suchmusters mit einem 3x3-Zentrum und zwei rechteckigen Ringen darum herum. Dabei sind Toleranzen vorstellbar, etwa dass mindestens eine Halblinie doch nicht die passende Anzahl Kantenübergänge aufweist. Die für eine Hälfte in Bezug auf eine Hauptachse beschriebene Verifikation kann für die andere Hälfte und die beiden Hälften der anderen Hauptachse wiederholt werden, so dass insgesamt viermal verifiziert wird. Auch hier ist eine Toleranz vorstellbar, etwa dass bei einem der vier Verifikationsschritte nicht alle Anzahlen von Kantenübergängen der Halblinien stimmen. Mit diesen Toleranzen ist die Fehlerquote zwischen einer zu scharfen Verifikation, die tatsächliche Suchmuster verwirft, und einer zu toleranten Verifikation mit falsch positiven Suchmustern einstellbar.

Vorzugsweise wird auf mindestens einer Halblinie zusätzlich der Abstand zu den Kantenübergängen geprüft. Auf einer äußeren Halblinie gibt es nur einen Kantenübergang, und dieser sollte in etwa im Abstand der halben Größe des Suchmusters erfolgen. Die inneren Halblinien sollten bestimmungsgemäß mehrere Kantenübergänge aufweisen. Für diese Halblinien kann neben dem letzten Kantenübergang auch geprüft werden, ob die Kantenübergänge zueinander einen Abstand aufweisen, der mit der Struktur eines halben Suchmusters verträglich ist. Es gibt also nicht nur eine Erwartung, wie viele Kantenübergänge es geben muss, sondern auch in welchen Abständen beziehungsweise an welchen Positionen diese Kantenübergänge liegen. Das erlaubt einen zusätzlichen optionalen Verifikationsschritt.

Vorzugsweise wird geprüft, ob in dem Bild drei zu einem rechtwinkligen Dreieck angeordnete Suchmuster aufgefunden werden. Für einen einzelnen QR-Code wären isolierte Suchmuster, nur zwei Suchmuster oder mehr als drei Suchmuster nicht plausibel. Sind es drei Suchmuster, so müssen sie ein gleichschenkliges rechteckiges Dreieck bilden, aus dem der Rahmen für den optischen Code sofort ablesbar ist. Diese Prüfung kann irgendwann innerhalb des Verfahrens stattfinden, insbesondere ganz früh oder ganz spät. Ganz früh bedeutet, dass es von Anfang an drei passende Kandidatenpositionen geben muss, um einen Bildabschnitt überhaupt noch genauer zu untersuchen. Ganz spät heißt, dass die einzelnen Suchmuster bereits verifiziert sind und erst dann geprüft wird, ob es drei davon gibt, die ein passendes Dreieck bilden.

Vorzugsweise wird ein anhand des Suchmusters lokalisierter Ausschnitt des Bildes einem Decoder zugeführt, um den optischen Code zu lesen. Dies kann unmittelbar im Anschluss an das Lokalisieren oder mit einem Zeitversatz geschehen, in einem selben oder einem anderen Gerät. Der Decoder muss sich dank der verlässlichen Lokalisierung eines optischen Codes nur mit Bildabschnitten befassen, die tatsächlich einen optischen Code enthalten. Das verkürzt die Decoderzeiten und verbessert damit letztlich die Leserate.

In bevorzugter Weiterbildung wird eine optoelektronische Codelesevorrichtung mit einem Lichtempfangselement zum Aufnehmen eines Bildes mit einem optischen Code und mit einer Steuer- und Auswertungseinheit angegeben, in der eine Ausführungsform des erfindungsgemäßen Verfahrens zum Lokalisieren eines optischen Codes implementiert ist. Sofern dabei ein optischer Code gefunden wird, wird er vorzugsweise anschließend gelesen, wobei dies wie soeben erläutert mit Zeitversatz und/oder in einem anderen Gerät erfolgen kann. Der Bildsensor ist je nach Ausführungsform ein Zeilen- oder Matrixsensor eines kamerabasierten Codelesers. Auch ein Barcodescanner ist vorstellbar, dessen Lichtempfangselement im Verlauf eines Scans ein jeweiliges Intensitätsprofil aufnimmt, das wie eine Bildzeile behandelt werden kann. Ein Verbund mehrerer Codeleser oder Kameraköpfe ist ebenfalls denkbar. Die Steuer- und Auswertungseinheit ist vorzugsweise Teil der Codelesevorrichtung selbst und insbesondere in deren Gehäuse untergebracht. Denkbar ist aber auch eine mindestens teilweise externe Steuer- und Auswertungseinheit. Die Codes sind bevorzugt auf Objekten angebracht, die auf einer Fördereinrichtung durch einen Erfassungsbereich des Bildsensors gefördert werden. Das ist eine typische Codeleseanwendung in stationärer Montage des Codelesers, oder jedenfalls des bilderfassenden Teils davon, an einer Fördereinrichtung oder einem Förderband.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Übersichtsdarstellung der beispielhaften Montage einer Codelesevorrichtung über einem Förderband;
- Fig. 2: ein beispielhaftes Ablaufdiagramm für das Auffinden einer Kandidatenposition eines Suchmusters, das genaue Lokalisieren des Suchmusters und das Verifizieren eines Suchmusters;
- Fig. 3: ein beispielhaftes Ablaufdiagramm für das Auffinden einer Kandidatenposition eines Suchmusters;
- Fig. 4: ein beispielhaftes Ablaufdiagramm für das genaue Lokalisieren des Suchmusters in einer Umgebung der Kandidatenposition;
- Fig. 5: ein beispielhaftes Ablaufdiagramm für das Verifizieren eines Suchmusters;
- Fig. 6: eine beispielhafte Darstellung eines Suchmusters mit Scanlinien und Kantenübergängen zum Auffinden einer Kandidatenposition des Suchmusters;
- Fig. 7: eine beispielhafte Darstellung eines Suchmusters mit sternförmigen Strahlen und Ringen, die Kantenübergänge längs der Strahlen miteinander verbinden;
- Fig. 8: ein Beispiel von Ringen gemäß Figur 7 in einem Bild mit mehreren Codes und Suchmustern;
- Fig. 9: eine beispielhafte Darstellung eines Suchmusters mit bestätigten und nicht bestätigten Ringabschnitten eines äußeren Rings;
- Fig. 10: eine beispielhafte Darstellung eines Suchmusters mit den beiden anhand von gruppierten Ringabschnitten aufgefundenen Hauptrichtungen;
- Fig. 11: ein Beispielbild mit einem Rahmen um ein Suchmuster, der in einer Hauptrichtung rekonstruiert wurde;
- Fig. 12: eine beispielhafte Darstellung eines Suchmusters mit sieben gleichmäßig zueinander beanstandeten Halblinien, die eine Hälfte des Suchmusters abdecken;
- Fig. 13: ein Beispielbild mit Suchmustern, die durch das erfindungsgemäße Verfahren aufgefunden und verifiziert wurden; und
- Fig. 14: das Beispielbild gemäß Figur 13 in einer Illustration der Verifizierung anhand von sieben Halblinien gemäß Fig. 12.

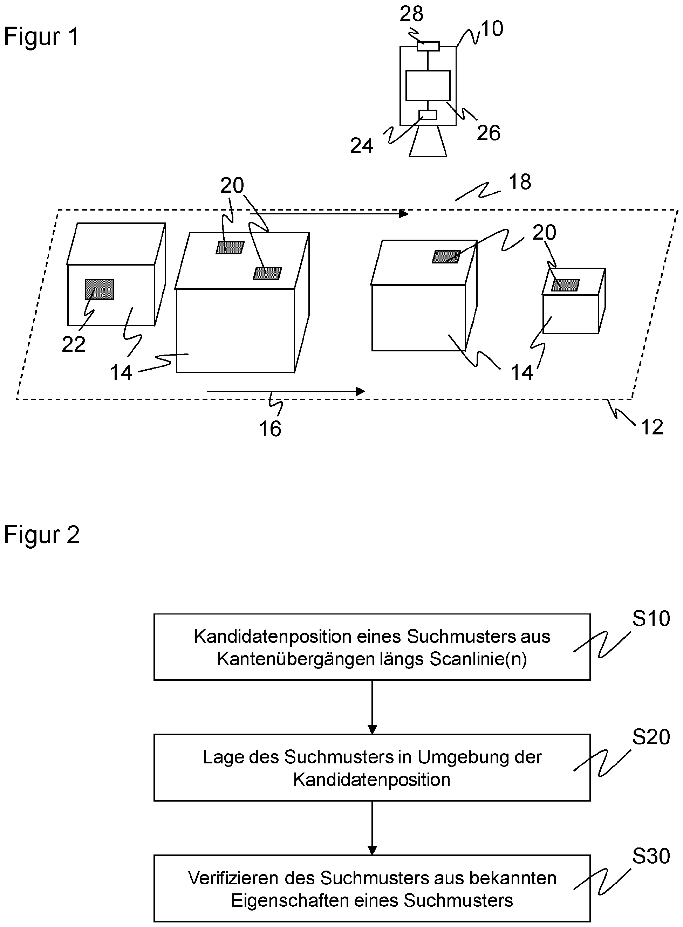

Figur 1 zeigt einen Codeleser 10, der über einem Förderband 12 montiert ist, welches Objekte 14, wie durch den Pfeil 16 angedeutet, durch den Erfassungsbereich 18 des Codelesers 10 fördert. Die Objekte 14 tragen an ihren Außenflächen Codes 20, die von dem Codeleser 10 erfasst und ausgewertet werden. Die Codes 20 können von dem Codeleser 10 nur dann erkannt werden, wenn sie auf der Oberseite oder zumindest von oben sichtbar angebracht sind. Daher kann abweichend von der Darstellung in Figur 1 zum Lesen eines etwa seitlich oder unten angebrachten Codes 22 eine Mehrzahl von Codelesern 10 aus verschiedenen Richtungen montiert sein, um eine sogenannte Omnilesung aus allen Richtungen zu ermöglichen. Diese stationäre Anwendung eines Codelesers an einem Förderband 12 ist in der Praxis sehr häufig. Die Erfindung bezieht sich aber vor allem auf das Lokalisieren und Lesen von Codes 20 beziehungsweise den Codeleser 10 selbst, so dass dieses Beispiel nicht einschränkend verstanden werden darf.

Der Codeleser 10 erfasst mit einem Bildsensor 24 Bilddaten der geförderten Objekte 14 und der Codes 20, die von einer Steuer- und Auswertungseinheit 26 mittels Bildauswertung und einem Decodierverfahren weiterverarbeitet werden. Die Steuer- und Auswertungseinheit 26 weist dafür einen oder mehrere Rechenbausteine auf, wie einen Mikroprozessor, ein FPGA (Field Programmable Gate Array), ein DSP (Digital Signal Processor), ein ASIC (Application-Specific Integrated Circuit), einen KI-Prozessor, eine NPU (Neural Processing Unit), eine GPU (Graphics Processing Unit) oder dergleichen. Über eine Schnittstelle 28 gibt der Codeleser 10 Informationen aus, wie gelesene Codes oder Bilddaten möglicherweise in verschiedenen Verarbeitungsstufen.

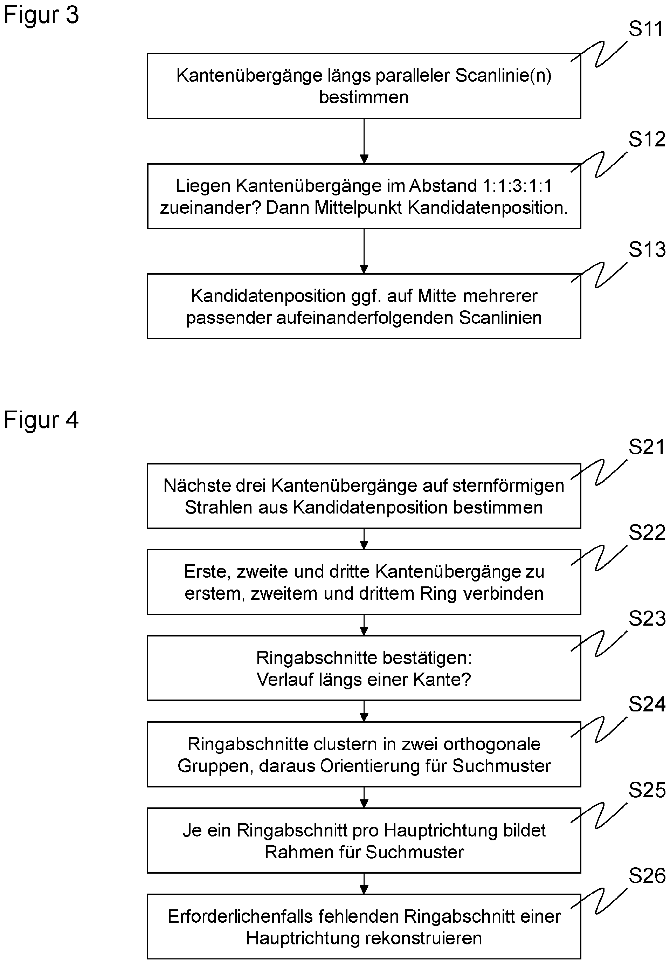

Figur 2 zeigt ein beispielhaftes Ablaufdiagramm zum Lokalisieren eines Codes 22 in von dem Codeleser 10 aufgenommenen Bilddaten. Dieses Verfahren kann in der Steuer- und Auswertungseinheit 26 oder zumindest teilweise extern durchgeführt werden. Es wird vorerst in einer Übersicht von drei Schritten beschrieben, die anschließend unter Bezugnahme auf die Figuren 3 bis 5 näher erläutert werden. Dabei sei jetzt schon bemerkt, dass die Abfolge aller Unterschritte der Figuren 3 bis 5 besonders vorteilhaft ist, aber die Erfindung auch Unterkombinationen umfasst, somit jeder Unterschritt erst einmal als optional zu verstehen ist.

In einem Schritt S10 werden Kandidatenpositionen für ein Suchmuster gefunden, indem die Pixelreihen längs zueinander paralleler Scanlinien durch das Bild ausgewertet werden, vorzugsweise zeilenweise. Auf diesen Scanlinien liegen, wenn sie ein Suchmuster überstreichen, Kantenübergänge in für das Suchmuster charakteristischen gegenseitigen Abständen. Auf diese Weise kann grob das Zentrum eines vermuteten Suchmusters lokalisiert werden. Diese Position wird als Kandidatenposition bezeichnet, weil dort ein Kandidat für ein Suchmuster erkannt worden ist.

In einem Schritt S20 wird die Umgebung einer Kantenposition weiter untersucht, um das Suchmuster genau zu lokalisieren und zu bestätigen, dass es sich um ein Suchmuster handelt. Das Ergebnis ist die genaue Lage des Suchmusters beispielsweise in Form eines Rahmens um diejenigen Pixel, die zu dem Suchmuster gehören.

In einem Schritt S30 wird das Suchmuster verifiziert. Nachdem aus Schritt S20 die genaue Lage bekannt ist, kann das gefundene Suchmuster in seinen Eigenschaften bis auf Ebene einzelner Codemodule mit den bekannten Eigenschaften eines Suchmusters verglichen werden. Es sind dabei Verifikationsschritte möglich, die nicht zum Auffinden im Schritt S20 beigetragen haben und die insbesondere sehr viel genauer sind. Falsch positiv gefundene Suchmuster werden dadurch sehr effizient ausgefiltert. Das ermöglicht auch, im Schritt S20 etwas toleranter zu bleiben und beispielsweise teilweise verdeckte Suchmuster zunächst noch zuzulassen. Ein solches Zusammenspiel aus zunächst großzügigerer Auswahl im Schritt S20 und dann besonders genauer Verifikation im Schritt S30 führt dazu, dass die allermeisten Codes gefunden werden und es sich dabei wirklich um Codes handelt.

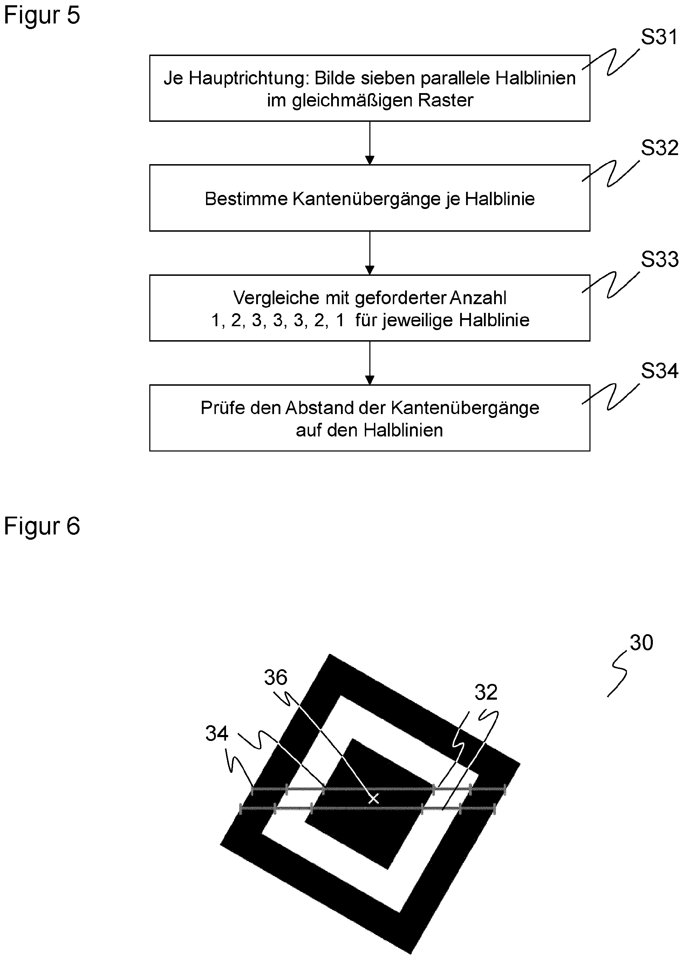

Figur 3 zeigt ein beispielhaftes Ablaufdiagramm für das Auffinden einer Kandidatenposition mit möglichen Unterschritten des Schritts S10 der Figur 2. Dies wird in Figur 6 illustriert, die ein beispielhaftes Suchmuster 30 zeigt. In einem Schritt S11 werden parallele Scanlinien 32 durch den zu untersuchenden Bildbereich gezogen, vorzugsweise horizontale Scanlinien, von denen Figur 6 der Übersicht halber nur zwei darstellt. Längs der Scanlinien 32 werden Kantenübergänge 34 zwischen hellen und dunklen Codebereiche oder umgekehrt zwischen dunklen und hellen Codebereichen bestimmt.

In einem Schritt S12 werden die Abstände zwischen den Kantenübergängen einer Scanlinie geprüft. Im Falle einer Scanlinie 32 durch ein Suchmuster 30 müssen sechs aufeinanderfolgende Kantenübergänge 34 gegenseitige Abstände im Verhältnis 1:1:3:1:1 aufweisen. Das liegt daran, dass das Suchmuster 30 aus einem Zentrum mit 3x3 Codemodulen besteht, die von zwei alternierenden rechteckigen Ringen der Breite jeweils eines Codemoduls umgeben sind. Daraus ergibt sich das genannte Verhältnis 1:1:3:1:1 bei beliebiger Richtung der Scanlinie 32 durch das Suchmuster. Werden also längs einer Scanlinie 32 sechs Kantenübergänge 34 unter Berücksichtigung einer Toleranz in Abständen im Verhältnis 1:1:3:1:1 gefunden, so wird hier ein Suchmuster 30 vermutet. Die zugehörige Kandidatenposition ist vorzugsweise der Mittelpunkt der Kantenübergänge, berechnet beispielsweise als gemeinsamer Schwerpunkt aller Kantenübergänge oder nur der äußersten der sechs betrachteten Kantenübergänge.

In einem Schritt S13 werden Kandidatenpositionen aufeinanderfolgender Scanlinien 32 zu einer Kandidatenposition 36 zusammengefasst, da es sich hier nicht um ein jeweils neues Suchmuster, sondern dasselbe Suchmuster 30 handelt, das mehrfach von den aufeinanderfolgenden Scanlinien 32 getroffen wird. Wieder gibt es verschiedene Berechnungsmethoden, beispielsweise als Schwerpunkt aller Kantenübergänge der betroffenen Scanlinien 32, nur der jeweils äußersten Kantenübergänge je Scanlinie 32 und/oder nur der äußersten Scanlinien 32, oder indem aus den mehreren Kandidatenpositionen je Scanlinie 32 ein gemeinsamer Mittelpunkt bestimmt wird.

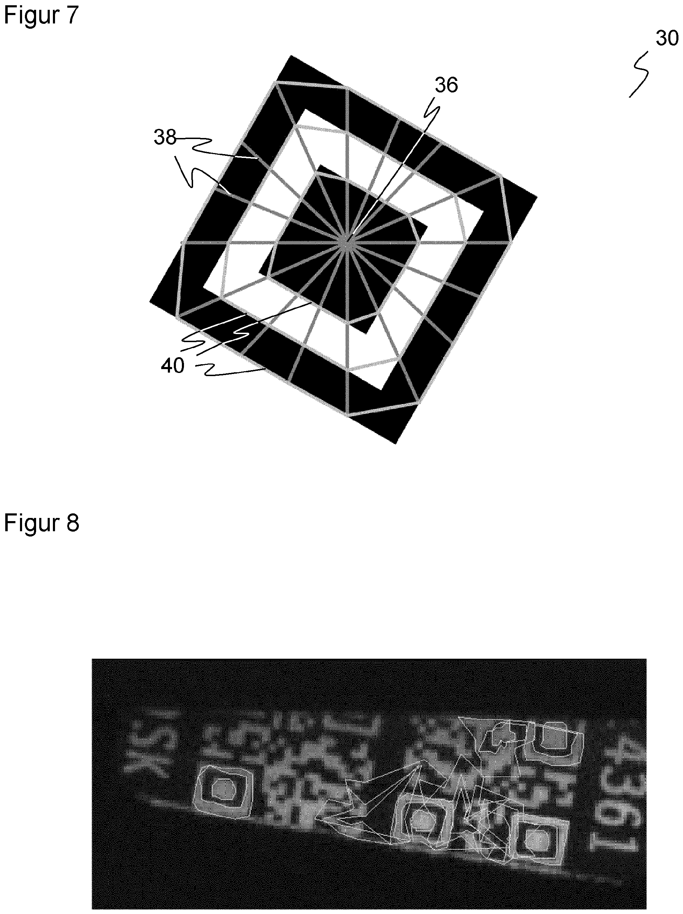

Figur 4 zeigt ein beispielhaftes Ablaufdiagramm für das genaue Lokalisieren des Suchmusters in einer Umgebung der Kandidatenposition mit möglichen Unterschritten des Schritts S20 der Figur 2. In einem Schritt S21, den das in Figur 7 dargestellte Suchmuster 30 illustriert, werden ausgehend von der Kandidatenposition 36 sternförmig Strahlen 38 gebildet, hier beispielhaft sechzehn dieser Strahlen 38 in einem gleichmäßigen Winkelraster mit einem gegenseitigen Winkelabstand von 22,5°. Auf jedem der Strahlen 38 werden die drei dem Ursprung in der Kandidatenposition 36 nächsten Kantenübergänge bestimmt. Die Kandidatenposition 36 kann abweichend von Figur 7 etwas dezentral im 3x3-Zentrum des Suchmusters 30 liegen, je nach konkretem Ergebnis der Schritte S10-S13.

In einem Schritt S22 werden die jeweiligen innersten, mittleren und äußersten der drei je Strahl 38 gefundenen drei Kantenübergänge miteinander verbunden. Dadurch entstehen drei Ringe 40. Konnten bei einem Strahl 38 im Schritt S21 keine drei Kantenübergänge gefunden werden, so wird der entsprechende Punkt im Ring 40 ausgelassen. Für den Fall, dass die Kandidatenposition 36 wie in Figur 7 in einem Suchmuster 30 liegt, stimmen diese Ringe 40 im Großen und Ganzen mit den Hell-Dunkel-Übergängen des Suchmusters 30 überein. Auf einige Ringabschnitte trifft das wegen der einfachen Erzeugung der Ringe 40 durch Verbindungslinien nicht zu, das wird sogleich zu Schritt S23 noch diskutiert.

Zuvor zeigt Figur 8 beispielhaft ein Bild mit mehreren Suchmustern, auf das Schritt S22 angewandt wurde. Die vorhandenen Suchmuster sind recht gut durch die Ringe getroffen. Oben rechts findet sich ein Beispiel, wo Punkte übersprungen werden mussten, weil in einigen Strahlen keine drei Kantenübergänge gefunden wurden. Es gibt neben den gefundenen Suchmustern einige falsch positive Kandidatenpositionen, wo die Verbindungslinien kaum noch als Ring bezeichnet werden können und eher ein Wirrwarr bilden. Das liegt daran, dass an diesen Kandidatenpositionen die drei Kantenübergänge von irgendwelchen Strukturen gebildet werden, nicht aber einem Suchmuster, und teilweise recht weit entfernt liegen. Die falsch positiven Kandidatenpositionen werden durch spätere Schritte noch ausgefiltert. Im Prinzip wären sie, wenn die Abweichung so deutlich ausfällt wie in manchen Fällen der Figur 8, auch schon an den völlig unplausiblen Abstandsverhältnissen der Kantenübergänge längs der betroffenen Strahlen 38 zu erkennen.

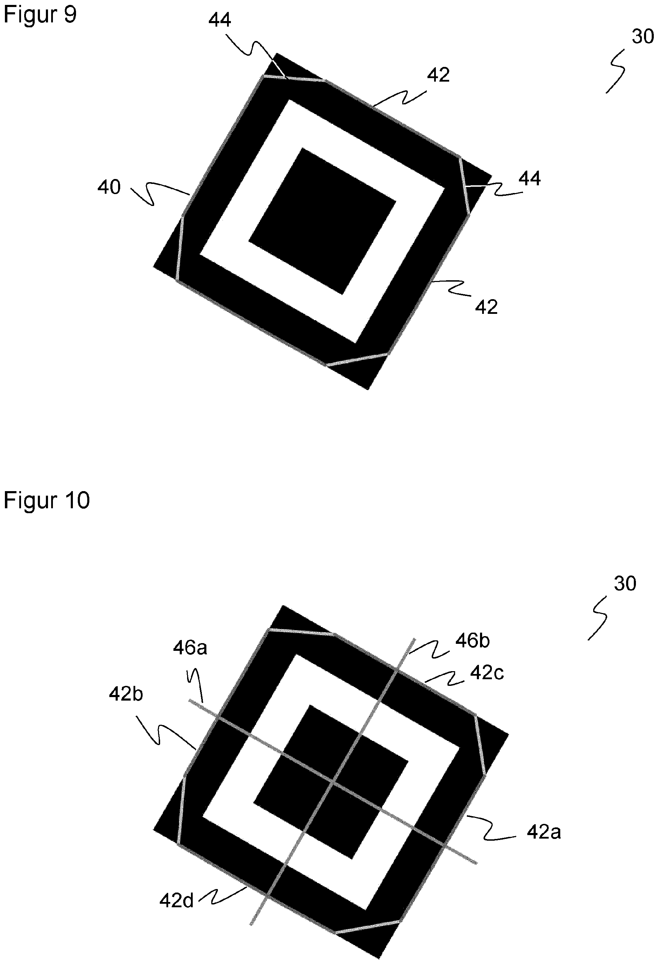

In einem Schritt S23 werden die Ringabschnitte der Ringe 40 bestätigt. Figur 9 illustriert dies für den äußersten Ring 40. Zum Bestätigen eines Ringabschnitts wird geprüft, ob die entsprechende Linie an einer Hell-Dunkel-Kante verläuft. Das trifft in Figur 9 für die somit bestätigten Ringabschnitte 42 zu, die nicht bestätigten Ringabschnitte 44 hingegen verlaufen innerhalb einer dunklen Fläche und damit an keiner Hell-Dunkel-Kante. Eine Möglichkeit, die bestätigten Ringabschnitte 42 aufzufinden, ist die Verwendung eines Sobel-Filters, mit dem die jeweilige Richtung eines Hell-Dunkel-Übergangs bestimmt wird. Ein bestätigter Ringabschnitt 42 muss auf den durch den Sobel-Filter herausgearbeiteten Punkten liegen, wobei einzelne Ausreißerpunkte toleriert werden können.

In einem Schritt S24 werden die Ringabschnitte 42, 44 nach ihrer Verlaufsrichtung in zwei zueinander orthogonale Gruppen klassifiziert. Dazu werden vorzugsweise nur die bestätigten Ringabschnitte 42 verwendet. In Figur 9 ist zu erkennen, dass die bestätigten Ringabschnitte 42 sehr klar entweder horizontal oder vertikal zu dem Suchmuster 30 verlaufen, während die Orientierung der nicht bestätigten Ringabschnitte 44 abweicht. Innerhalb der beiden Gruppen kann aus den Orientierungen der zugeteilten Ringabschnitte 42, 44 eine jeweilige Hauptachse bestimmt werden, beispielsweise als mittlere Orientierung innerhalb der Gruppe. Figur 10 illustriert die beiden dadurch gefundenen Hauptachsen 46a-b des Suchmusters 30.

In einem Schritt S25 wird in den vier Hauptrichtungen zu beiden Seiten der Hauptachsen 46a-b, also nach rechts, links, oben und unten gemäß der nun bekannten Orientierung des Suchmusters 30, jeweils ein Ringabschnitt 42a-d bevorzugt aus dem äußeren Ring aufgefunden. Erneut kommen vorzugsweise nur bestätigte Ringabschnitte 42 in Frage. Vier Geraden längs der gefundenen Ringabschnitte 42a-d bilden einen Rahmen um das Suchmuster 30, dessen Lage somit nun erkannt ist. Optional kann der Rahmen noch durch Auswertung der Umgebung der Geraden, insbesondere von zusätzlichen Scanlinien orthogonal zu den Geraden verfeinert und in noch bessere Übereinstimmung mit dem Suchmuster 30 gebracht werden.

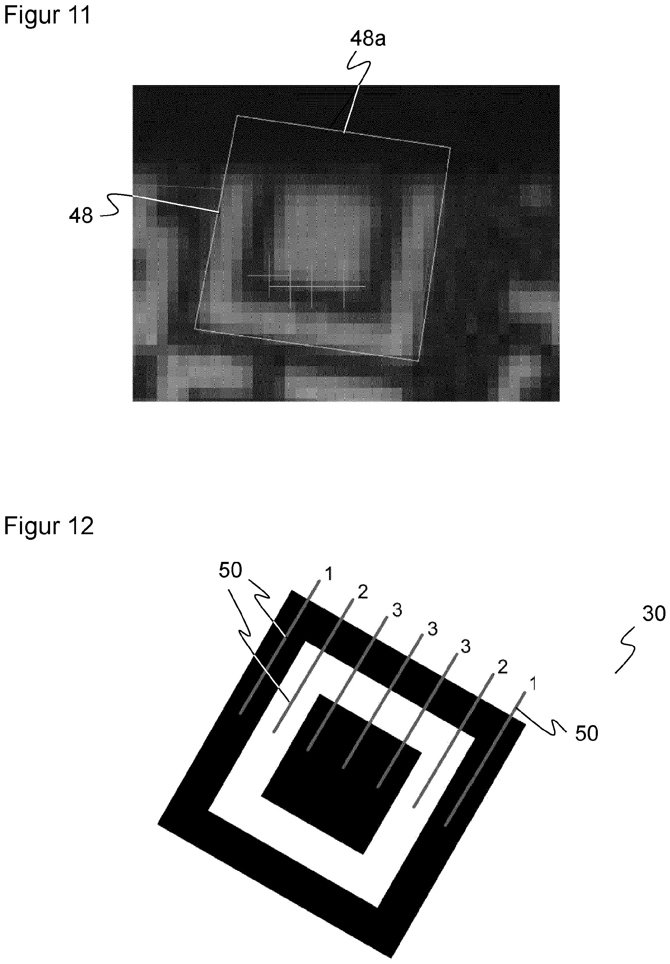

In einem Schritt S26 wird ein Ringabschnitt 42a-d rekonstruiert, falls in einer der Hauptrichtungen kein Ringabschnitt 42a-d gefunden werden konnte, oder jedenfalls kein Ringabschnitt 42a-d des äußeren Rings. Figur 11 zeigt ein Beispielbild eines Suchmusters, bei dem nach oben hin wegen einer Teilverdeckung oder eines sonstigen Bildfehlers ein Ringabschnitt fehlt. Der Rahmen 48 ist deshalb an der oberen Kante 48a rekonstruiert. Dazu können die gut erkannten übrigen Kanten des Rahmens 48 und/oder Ringabschnitte von inneren Ringen verwendet werden. In die Rekonstruktion beziehungsweise Extrapolation gehen ferner die bekannten Größenverhältnisse eines Suchmusters ein. Für das Beispiel der Figur 11 kann für ein einfaches Vorgehen davon ausgegangen werden, dass alle Kanten des Rahmens so groß sein müssen wie die untere Kante. Eine Zusatzinformation ist, dass die zu rekonstruierende Kante 48a in etwa so weit von der Kandidatenposition 36 entfernt sein sollte wie die gegenüberliegende untere Kante. Alternativ oder zusätzlich ist auch nach oben hin ein Ringabschnitt erkannt, nämlich des inneren und/oder mittleren Rings. Aufgrund der Struktur eines Suchmusters ist bekannt, in welchem Verhältnis der Abstand des inneren Rings zu dem zu rekonstruierenden äu-ßeren Ring steht, nämlich den Abstandsverhältnissen 1:1:3:1:1 folgend. Dank des Schrittes S26 wird die Lage eines Suchmusters 30 auch in kritischen Fällen noch erkannt. Es besteht eine erhöhte Gefahr, dass dadurch mehr falsch positive Suchmuster erkannt werden, was durch die nun erläuterte abschließende Verifikation aufgefangen wird.

Figur 5 zeigt ein beispielhaftes Ablaufdiagramm für das Verifizieren eines Suchmusters mit möglichen Unterschritten des Schritts S30 der Figur 2. Figur 12 illustriert das Verifizieren anhand einer Abbildung eines Suchmusters 30. In einem Schritt S31 werden je Hauptrichtung, also nach rechts, links, oben und unten bezüglich der bekannten Orientierung mit Hauptachsen 46a-b, sieben zueinander parallele Halblinien 50 gezogen. Die Halblinien 50 verlaufen von einer der Hauptachsen 46a-b orthogonal über eine Hälfte des Suchmusters 30. Bei vier solchen Gruppen je sieben Halblinien 50 ergeben sich insgesamt 28 Halblinien, die viermal in gegenseitiger 90°-Verdrehung zueinander jeweils das halbe Suchmuster 30 überdecken. Da vorab ein Rahmen 48 um das Suchmuster 30 gefunden war, ist die Größe des Suchmusters 30 ebenso wie dessen Modulgröße nun bekannt. Deshalb können die Halblinien 50 so beabstandet werden, dass sie jeweils durch eine eigene Modulreihe verlaufen. Das wird beispielsweise durch eine gleichmäßige Aufteilung der Breite beziehungsweise Höhe des Suchmusters 30 erreicht, wobei Abweichungen so lange unschädlich sind, wie weiterhin jede Halblinie 50 durch eine eigene Modulreihe verläuft. Die Anzahl sieben der Halblinien 50 ist dafür passend zu den 7x7 Codemodulen des Suchmusters 30 gewählt.

In einem Schritt S32 werden die Kantenübergänge je Halblinie 50 bestimmt. Dafür muss nur über eine Länge der Halblinie 50 gesucht werden, die der halben Größe des Rahmens 48 entspricht, eventuell mit einem gewissen Puffer. Kantenübergänge außerhalb des Rahmens 48 sind nicht mehr auf ein valides Suchmuster 30 zurückzuführen.

In einem Schritt S33 wird die Anzahl der je Halblinie 50 gefundenen Kantenübergänge mit der Anzahl verglichen, die bei einem Suchmuster 30 erwartet wird, nämlich für die sieben Halblinien 50 in dieser Reihenfolge 1, 2, 3, 3, 3, 2, 1 Kantenübergänge. Diese geforderte Anzahl ist in Figur 12 am Ende der jeweiligen Halblinie 50 notiert. Es ist aus der Darstellung auch unmittelbar ersichtlich, warum diese Anzahl zu erwarten ist. Beispielsweise verlaufen die äußeren Halblinien 50 vollständig innerhalb des dunklen äu-ßeren Rechteckrings des Suchmusters, so dass nur ein einziger Kantenübergang am Rand des Suchmusters gefunden werden sollte. Es ist grundsätzlich vorstellbar, eine Abweichung in der Anzahl Kantenübergänge auf einer Halblinie 50 zu tolerieren, aber das verwäscht die Aussagekraft der Verifikation doch stark. Eher denkbar ist, nicht für sämtliche Halblinien 50 die Übereinstimmung zwischen der ermittelten und erwarteten Anzahl Kantenübergänge zu fordern. Eine solche Toleranz kann pro Gruppe von Halblinien 50 oder alle Halblinien 50 vorgegeben werden, also beispielsweise die Forderung, dass je Gruppe sechs der sieben Halblinien 50 über die richtige Anzahl Kantenübergänge verlaufen oder insgesamt 26 der 28 Halblinien 50. Das Suchmuster 30 gilt entsprechend dem Schritt S33 als verifiziert, wenn der Vergleich je nach Ausführungsform mit oder ohne Toleranz eine ausreichende Übereinstimmung liefert.

In einem optionalen Schritt S34 kann noch eine zusätzliche Bedingung geprüft werden, nämlich ob die Abstände oder Positionen der Kantenübergänge auf der jeweiligen Halblinie 50 plausibel sind. Der eine erwartete Kantenübergang der äußeren Halblinien 50 liegt in etwa im Abstand der halben Größe des Suchmusters 30 beziehungsweise des Rahmens 48, wobei dieser Abstand auch als 3½ Modulgrößen ausgedrückt werden kann. Die gleiche Erwartung gilt für den jeweiligen fernsten Kantenübergang der anderen Halblinien 50. Die anderen Halblinien 50 haben zusätzliche innere Kantenübergänge, die im Abstand 1½ beziehungsweise 2½ Modulgrößen erwartet werden. Für den Schritt S34 sind vorzugsweise Toleranzen vorzusehen, und zwar hinsichtlich der erwarteten Abstände und/oder einer Quote der Halblinien 50, die die Bedingung des Schrittes S34 erfüllen müssen.

Zusätzlich zu den Schritten der Figur 5 sind weitere optionale Ergänzungen möglich. Falls vorzeitig festgestellt wird, dass eine Übereinstimmung innerhalb der Toleranzen nicht erreicht werden kann, etwa weil bereits zu viele Halblinien 50 eine Erwartung an Anzahl und/oder Abstand der Kantenübergänge nicht erfüllen, kann die Verifikation vorzeitig mit negativem Ergebnis abgebrochen werden. Das passiert beispielsweise dann, wenn zu viele Module des Suchmusters verdeckt sind. Bei einem weiteren möglichen Test wird für jede Halblinie 50 aus den Hell-Dunkel-Übergängen bestimmt, ob das Zentrum des Suchmusters 30 hell oder dunkel sein müsste, um mit dieser Halblinie 50 konsistent zu sein. Über die Farbe des Zentrums muss gemäß diesem Test eine ausreichende Einigkeit über beispielsweise 75% der Halblinien 50 bestehen.

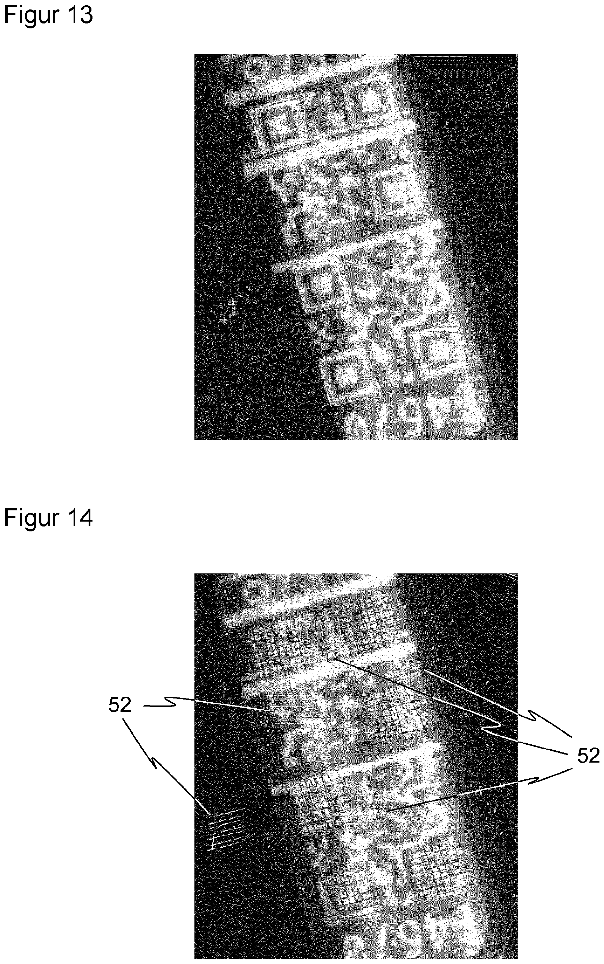

Figur 13 zeigt ein Beispielbild mit mehreren Suchmustern, die durch das erfindungsgemäße Verfahren aufgefunden und verifiziert wurden. Figur 14 illustriert die zugehörige Verifikation mit den soeben erläuterten Halblinien. Dunkle Halblinien haben das Suchmuster bestätigt, helle Halblinien nicht. An den mit Bezugszeichen 52 markierten Stellen ist die Verifikation an mehreren Kandidatenpositionen zurecht gescheitert, nur die richtigen Suchmuster wurden durch die Verifikation bestätigt.

Speziell für QR-Codes kann in einem abschließenden Test geprüft werden, ob jeweils drei Suchmuster in einem gleichschenklig-rechtwinkligen Dreieck gefunden wurden. Je nach Ausführungsform werden Suchmuster, die diese Bedingung nicht erfüllen, unmittelbar verworfen, oder beispielsweise einem Bildbereich mit nur einem oder zwei Suchmustern oder einer abweichenden Anordnung der Suchmuster wird im Decoder nur nachrangig oder weniger Decoderzeit gewidmet. Das erfindungsgemäße Auffinden von Suchmustern ist in gleicher Weise auch für einen Aztec-Code anwendbar, wobei dann natürlich keine drei Suchmuster im Dreieck erwartet werden, da ein Aztec-Code nur ein einziges Suchmuster im Zentrum aufweist. Die Erfindung lässt sich auch für andere Suchmuster anwenden, für QR-Codes oder Aztec-Codes spezifische Bedingungen wie das Verhältnis 1:1:3:1:1 sind dann geeignet anzupassen.

Wie auch an den Beispielen in Figur 14 zu sehen, können erfindungsgemäß mehr Kandidatenpositionen anfänglich akzeptiert werden, um die Sensitivität der Lokalisation von Codes zu erhöhen. Somit werden auch schwer erkennbare Suchmuster erfasst, etwa teilverdeckte Suchmuster oder solche mit schlechtem Kontrast. Dabei ist zudem die jeweils gefundene Lage des Suchmusters beispielsweise als Rahmen 48 im Vergleich zu einer Bounding Box oder anderen Verfahren des Standes der Technik verbessert. Die höhere Zahl von Kandidatenpositionen führt wegen der abschließenden Verifikation keineswegs zu mehr falsch positiven Ergebnissen, im Gegenteil sind die am Ende des Verfahrens erkannten Suchmuster sogar verlässlicher als im Stand der Technik, es wird also auch eine hohe Selektivität erreicht. Dabei ist vor der Verifikation sogar eine Rekonstruktion oder Extrapolation von Suchmustern erlaubt.

## Patentansprüche

1. Verfahren zum Lokalisieren eines optischen QR- oder Aztec-Codes (20) in einem Bild mit einer Vielzahl von Pixeln anhand eines Suchmusters (30) des optischen Codes (20), wobei zunächst mindestens eine Kandidatenposition (36) für ein Suchmuster (30) anhand von Kantenübergängen längs mindestens einer Linie (32) durch das Bild und dann in einer Umgebung der Kandidatenposition (36) die Lage (48) des Suchmusters (30) bestimmt wird, wobei in der gefundenen Lage (48) anhand einer bekannten Eigenschaft eines Suchmusters verifiziert wird, dass das Bild in dieser Lage (48) ein Suchmuster (30) aufweist, **dadurch gekennzeichnet,**
**dass** zum Bestimmen der Lage (48) des Suchmusters (30) in einer Umgebung der Kandidatenposition (36) längs von der Kandidatenposition (36) sternförmig ausgehender Strahlen (38) die jeweils nächsten drei Kantenübergänge bestimmt werden und dass die jeweiligen ersten Kantenübergänge der Strahlen (38) zu einem ersten Ring (40), die jeweiligen zweiten Kantenübergänge der Strahlen (38) zu einem zweiten Ring (40) und/oder die jeweiligen dritten Kantenübergänge (38) zu einem dritten Ring (40) verbunden werden.

2. Verfahren nach Anspruch 1,
wobei eine Kandidatenposition (36) bestimmt ist, wenn die Kantenübergänge längs der mindestens einen Linie (32) unter Berücksichtigung einer Toleranz Abstände im Verhältnis 1:1:3:1:1 zueinander aufweisen.

3. Verfahren nach Anspruch 1 oder 2,
wobei die Kandidatenposition (36) als Schwerpunkt von Kantenübergängen längs der mindestens einen Linie (32) bestimmt wird.

4. Verfahren nach einem der vorhergehenden Ansprüche,
wobei, wenn Kantenübergänge längs mehrerer zueinander paralleler Linien (32) auf ein Suchmuster (30) hinweisen, die Kandidatenposition (36) mittig zwischen den parallelen Linien (32) bestimmt wird.

5. Verfahren nach einem der vorhergehenden Ansprüche,
wobei die jeweils nächsten drei Kantenübergänge längs acht oder sechzehn Strahlen (38) in gleichem Winkelabstand zueinander bestimmt werden.

6. Verfahren nach einem der vorhergehenden Ansprüche,
wobei bestätigte Ringabschnitte (42) der Ringe (40) ermittelt werden, die längs einer Kante verlaufen.

7. Verfahren nach Anspruch 6,
wobei die bestätigten Ringabschnitte (42) mit Hilfe eines Sobelfilters bestimmt werden.

8. Verfahren nach einem der vorhergehenden Ansprüche,
wobei Ringabschnitte (42, 44) der Ringe (40) in horizontale und vertikale Ringabschnitte klassifiziert werden und daraus eine Orientierung (46a-b) des Suchmusters (30) bestimmt wird.

9. Verfahren nach Anspruch 8,
wobei je ein äußerster Ringabschnitt (42, 44) in den vier Hauptrichtungen gemäß der Orientierung (46a-b) ausgewählt wird, und wobei Geraden längs der Ringabschnitte (42, 44) die Lage (48) des Suchmusters (30) umrahmen.

10. Verfahren nach Anspruch 9,
wobei, falls in einer Hauptrichtung kein äußerster Ringabschnitt (42, 44) aufgefunden werden kann, der fehlende äußerste Ringabschnitt (48a) aus anderen Ringabschnitten (42, 44) anhand der bekannten Struktur eines Suchmusters rekonstruiert wird.

11. Verfahren nach einem der vorhergehenden Ansprüche,
wobei zum Verifizieren des Suchmusters (30) sieben zueinander parallele Halblinien (50) in gleichmäßigem Abstand zueinander von einer Hauptachse (46a-b) des Suchmusters (30) ausgehend nach außen hin durch eine Hälfte des Suchmusters (30) gelegt werden und für das Verifizieren des Suchmusters (30) gefordert wird, dass auf den Halblinien (50) in dieser Reihenfolge jeweils 1, 2, 3, 3, 3, 2, 1 Kantenübergänge liegen.

12. Verfahren nach Anspruch 11,
wobei auf mindestens einer Halblinie (50) zusätzlich der Abstand der Kantenübergängen geprüft wird.

13. Verfahren nach einem der vorhergehenden Ansprüche,
wobei geprüft wird, ob in dem Bild drei zu einem rechtwinkligen Dreieck angeordnete Suchmuster (30) aufgefunden werden.

14. Verfahren nach einem der vorhergehenden Ansprüche,
wobei ein anhand des Suchmusters (30) lokalisierter Ausschnitt des Bildes einem Decoder (26) zugeführt wird, um den optischen Code (20) zu lesen.

15. Optoelektronische Codelesevorrichtung (10) mit einem Lichtempfangselement (24) zum Aufnehmen eines Bildes mit einem optischen Code (20) und mit einer Steuer- und Auswertungseinheit (26), in der ein Verfahren zum Lokalisieren eines optischen Codes (20) nach einem der vorhergehenden Ansprüche implementiert ist.

## Claims

1. A method for locating an optical QR or Aztec code (20) in an image having a plurality of pixels using a finder pattern (30) of the optical code (20), wherein first at least one candidate position (36) for a finder pattern (30) is determined on the basis of edge transitions along at least one line (32) through the image and then the position (48) of the finder pattern (30) is determined in a neighborhood of the candidate position (36), wherein in the position (48) found it is verified, on the basis of a known property of a finder pattern, that the image has a finder pattern (30) in this position (48),
**characterized in that**, in order to determine the position (48) of the finder pattern (30) in a neighborhood of the candidate position (36), the respective next three edge transitions are determined along rays (38) emanating in a star shape from the candidate position (36), and **in that** the respective first edge transitions of the rays (38) are joined to form a first ring (40), the respective second edge transitions of the rays (38) are joined to form a second ring (40) and/or the respective third edge transitions (38) are joined to form a third ring (40).

2. The method according to claim 1,
wherein a candidate position (36) is determined when the edge transitions along the at least one line (32) are spaced from one another in the ratio 1:1:3:1:1, taking into account a tolerance.

3. The method according to claim 1 or 2,
wherein the candidate position (36) is determined as the center of gravity of edge transitions along the at least one line (32).

4. The method according to any of the preceding claims,
wherein, if edge transitions along a plurality of mutually parallel lines (32) indicate a finder pattern (30), the candidate position (36) is determined centrally between the parallel lines (32).

5. The method according to any of the preceding claims,
wherein the respective next three edge transitions along eight or sixteen rays (38) are determined at the same angular distance from each other.

6. The method according to any of the preceding claims,
wherein confirmed ring portions (42) of the rings (40) are determined in that they run along an edge.

7. The method according to claim 6,
wherein the confirmed ring portions (42) are determined by means of a Sobel filter.

8. The method according to any of the preceding claims,
wherein ring portions (42, 44) of the rings (40) are classified into horizontal and vertical ring portions and an orientation (46a-b) of the finder pattern (30) is determined therefrom.

9. The method according to claim 8,
wherein an outermost ring section (42, 44) is selected in each of the four main directions according to the orientation (46a-b), and wherein straight lines along the ring sections (42, 44) frame the position (48) of the finder pattern (30).

10. The method according to claim 9,
wherein, if no outermost ring section (42, 44) can be found in a main direction, the missing outermost ring section (48a) is reconstructed from other ring sections (42, 44) on the basis of the known structure of a finder pattern.

11. The method according to any of the preceding claims,
wherein, for verifying the finder pattern (30), seven mutually parallel half-lines (50) are formed at a uniform distance from one another starting from a main axis (46a-b) of the finder pattern (30) outwards through one half of the finder pattern (30) and, for verifying the finder pattern (30), it is required that 1, 2, 3, 3, 3, 2, 1 edge transitions respectively lie on the half-lines (50) in this order.

12. The method according to claim 11,
wherein the distance between the edge transitions is additionally checked on at least one half-line (50).

13. The method according to any of the preceding claims,
wherein it is checked whether three finder patterns (30) arranged to form a right-angled triangle are found in the image.

14. The method according to any of the preceding claims,
wherein a section of the image located on the basis of the finder pattern (30) is fed to a decoder (26) in order to read the optical code (20).

15. An optoelectronic code reading device (10) having a light receiving element (24) for receiving an image including an optical code (20) and having a control and evaluation unit (26) in which a method for locating an optical code (20) according to any of the preceding claims is implemented.

## Revendications

1. Procédé de localisation d'un code optique QR ou Aztec (20) dans une image, comprenant une pluralité de pixels, à l'aide d'un motif de recherche (30) du code optique (20), dans lequel on détermine tout d'abord au moins une position candidate (36) pour un motif de recherche (30) à l'aide de transitions de bord le long d'au moins une ligne (32) à travers l'image et ensuite, dans un environnement de la position candidate (36), on détermine la position (48) du motif de recherche (30), dans la position (48) trouvée, on vérifie, à l'aide d'une propriété connue d'un motif de recherche, que l'image présente un motif de recherche (30) dans cette position (48),
**caractérisé en ce que**
pour déterminer la position (48) du motif de recherche (30) dans un environnement de la position candidate (36), on détermine les trois transitions de bord respectivement les plus proches le long de rayons (38) partant en étoile de la position candidate (36), et **en ce que** l'on relie en un premier anneau (40) les premières transitions de bord respectives des rayons (38), on relie en un deuxième anneau (40) les deuxièmes transitions de bord respectives des rayons (38), et/ou on relie en un troisième anneau (40) les troisièmes transitions de bord respectives (38).

2. Procédé selon la revendication 1,
dans lequel une position candidate (36) est déterminée lorsque les transitions de bord le long de ladite au moins une ligne (32) présentent des distances les unes des autres dans le rapport 1:1:3:1:1, en tenant compte d'une tolérance.

3. Procédé selon la revendication 1 ou 2,
dans lequel on détermine la position candidate (36) en tant que barycentre des transitions de bord le long de ladite au moins une ligne (32).

4. Procédé selon l'une des revendications précédentes,
dans lequel, si des transitions de bord le long de plusieurs lignes (32) parallèles entre elles indiquent un motif de recherche (30), on détermine la position candidate (36) au centre entre les lignes parallèles (32).

5. Procédé selon l'une des revendications précédentes,
dans lequel on détermine les trois transitions de bord respectives les plus proches le long de huit ou seize rayons (38) à la même distance angulaire les uns des autres.

6. Procédé selon l'une des revendications précédentes,
dans lequel on détermine des portions annulaires confirmées (42) des anneaux (40) qui s'étendent le long d'un bord.

7. Procédé selon la revendication 6,
dans lequel on détermine des portions annulaires confirmées (42) à l'aide d'un filtre de Sobel.

8. Procédé selon l'une des revendications précédentes,
dans lequel on classifie des portions annulaires (42, 44) des anneaux (40) en portions annulaires horizontales et verticales, et on en détermine une orientation (46a-b) du motif de recherche (30).

9. Procédé selon la revendication 8,
dans lequel on sélectionne une portion annulaire (42, 44) la plus extérieure dans chacun des quatre sens principaux selon l'orientation (46a-b), des lignes droites le long des portions annulaires (42, 44) encadrent la position (48) du motif de recherche (30).

10. Procédé selon la revendication 9,
dans lequel, si on ne peut trouver aucune portion annulaire (42, 44) la plus extérieure dans un sens principal, on reconstruit la portion annulaire (48a) la plus extérieure qui manque à partir d'autres portions annulaires (42, 44) à l'aide de la structure connue d'un motif de recherche.

11. Procédé selon l'une des revendications précédentes,
dans lequel, pour vérifier le motif de recherche (30), on pose sept demi-lignes (50), parallèles les unes aux autres, à égale distance les unes des autres à partir d'un axe principal (46a-b) du motif de recherche (30) vers l'extérieur à travers une moitié du motif de recherche (30), et, pour vérifier le motif de recherche (30), il est exigé que sur les demi-lignes (50) se trouvent respectivement 1, 2, 3, 3, 3, 2, 1 transitions de bord, dans cet ordre.

12. Procédé selon la revendication 11,
dans lequel, sur au moins une demi-ligne (50), on contrôle en supplément la distance des transitions de bord.

13. Procédé selon l'une des revendications précédentes,
dans lequel on vérifie si l'on trouve dans l'image trois motifs de recherche (30) disposés en un triangle rectangle.

14. Procédé selon l'une des revendications précédentes,
dans lequel on envoie à un décodeur (26) une partie de l'image, localisée à l'aide du motif de recherche (30), afin de lire le code optique (20).

15. Dispositif optoélectronique (10) de lecture de code, comprenant un élément de réception de lumière (24), pour enregistrer une image avec un code optique (20), et comprenant une unité de commande et d'évaluation (26), permettant de mettre en oeuvre un procédé de localisation d'un code optique (20) selon l'une des revendications précédentes.
